# EUROPEAN PATENT APPLICATION

(11) **EP 3 564 896 A1**
(43) Date of publication of application: **06.11.2019**
(21) Application number: 17885474.1
(22) Date of filing: 27.12.2017
(51) Int. Cl.: G06Q 50/10, G06F 13/00

(54) **INFORMATION PROCESSING DEVICE AND INFORMATION PROCESSING PROGRAM**

(30) Priority: 28.12.2016 JP 2016257995
(71) Applicant: Meimo Corporation, Ashiya-shi, Hyogo 659-0061 (JP)
(72) Inventor: KAGURA, Akihito, Ashiya-shi, Hyogo 659-0061 (JP); TAKEDA, Rintaro, Ashiya-shi, Hyogo 659-0061 (JP)
(74) Representative: Zimmermann, Tankred Klaus
(86) International application number: PCT/JP2017/047423
(87) International publication number: WO 2018/124312

(57) **Abstract**

An information processing apparatus includes: an accepting unit configured to accept a posted idea, and accept amount data, or index data corresponding to the amount data, selected by a poster of the idea from a plurality of options, or presented by the poster of the idea within a range that does not exceed an upper limit, as payment in accordance with the post of the idea; and a processing unit configured to store the idea accepted by the accepting unit in a storage unit, associating the idea with the amount or index data accepted by the accepting unit.

## Description

### TECHNICAL FIELD

The present invention relates to an information processing apparatus and information processing program that enables easy collection of promising ideas and easy finding of promising ideas from many collected ideas.

### BACKGROUND ART

In recent years, attention has been given to a development method called open innovation that companies actively adopt external ideas and inventions and develop new products and services. In order to realize open innovation, a company itself needs to look for a necessary external idea. However, a search for an external idea is not easy. Therefore, a system for acquiring necessary external ideas has been conventionally proposed (refer to, for example, Patent Document 1).

### CITATION LIST

### PATENT LITERATURE

Patent Document 1: JP-A-2011-198186

### DISCLOSURE OF THE INVENTION

### PROBLEMS TO BE SOLVED BY THE INVENTION

However, it is not easy to find a promising idea from many good and bad ideas. A method such as the ranking of collected ideas based on the number of votes of many evaluators is conceivable. However, if such a method is used, the judging skills of evaluators are reflected on the ranking, and an idea like a rough diamond may not be appropriately evaluated and may remain obscure. Moreover, it takes very much time and effort to evaluate many ideas. Accordingly, it is very difficult to keep bearing the manpower and cost for operating this system. Therefore, it is desirable to provide an information processing apparatus and information processing program that makes it possible to easily collect promising ideas and easily find promising ideas from many collected ideas.

A first information processing program according to one embodiment of the present invention causes a computer to execute the following two steps:
(A1) an acceptance step of accepting a post of an idea and accepting amount data, or index data corresponding to the amount data, selected by a poster of the idea from a plurality of options, or presented by the poster of the idea within a range that does not exceed an upper limit, as payment in accordance with the post of the idea; and
(A2) an output step of outputting the idea accepted in the acceptance step, associating the idea with the amount or index data accepted in the acceptance step.

An information processing apparatus according to one embodiment of the present invention includes an accepting unit and a processing unit. In the information processing apparatus, the accepting unit accepts a posted idea, and accepts amount data, or index data corresponding to the amount data, selected by a poster of the idea from a plurality of options, or presented by the poster of the idea within a range that does not exceed an upper limit, as payment in accordance with the post of the idea. In the information processing apparatus, the processing unit stores the idea accepted by the accepting unit in a storage unit, associating the idea with the amount or index data accepted by the accepting unit. The storage unit may be built in the information processing apparatus, or in an information processing apparatus different from the information processing apparatus.

The idea may include summary character data with a relatively small number of characters and detailed character data with a relatively large number of characters. In this case, in the information processing apparatus, the processing unit may output a plurality of sets of the summary character data read from the storage unit as a first list associated with the amount or index data, or as a second list sorted according to the amount or index data. In the information processing apparatus, the accepting unit may further accept a selection of the summary character data on the first or second list. In this case, in the information processing apparatus, the processing unit may read and output, from the storage unit, the detailed character data corresponding to the summary character data being the selection target accepted by the accepting unit.

Furthermore, in the information processing apparatus, after the selection of the summary character data, the processing unit may output, as the first or second list, the summary character data without at least part of the summary character data being the selection target accepted by the accepting unit, or the summary character data including the summary character data that is the selection target accepted by the accepting unit and has at least a part on which a process of making characters illegible has been performed. Furthermore, in the information processing apparatus, after outputting, as the first or second list, the summary character data without at least part of the summary character data being the selection target accepted by the accepting unit, or the summary character data including the summary character data that is the selection target accepted by the accepting unit and at least a part on which the process of making characters illegible has been performed, the processing unit may output the summary character data including the summary character data being the selection target accepted by the accepting unit, as the first or second list, on the basis of satisfaction of a predetermined condition.

A second information processing program according to one embodiment of the present invention causes a computer to execute: a first reading step of reading information from a storage unit; and a first processing step of processing the information read out in the first reading step. Here, the storage unit stores a posted idea, associating the idea with amount data, or index data corresponding to the amount data, selected by a poster of the idea from a plurality of options as payment in accordance with the post of the idea, or presented by the poster of the idea within a range that does not exceed an upper limit as payment in accordance with the post of the idea. The idea includes summary character data with a relatively small number of characters and detailed character data with a relatively large number of characters. In the first reading step, the second information processing program reads out a plurality of sets of the summary character data and the amount or index data, as the information, from the storage unit. In the first processing step, the second information processing program causes a display unit to display the plurality of sets of the summary character data read from the storage unit as a first list associated with the amount or index data read from the storage unit, or as a second list sorted according to the amount or index data read from the storage unit.

A third information processing program according to one embodiment of the present invention causes a computer to execute: a first reading step of reading information from a storage unit; and a first processing step of processing the information read out in the first reading step. Here, the storage unit stores a posted idea, associating the idea with amount data, or index data corresponding to the amount data, selected by a poster of the idea from a plurality of options as payment in accordance with the post of the idea, or presented by the poster of the idea within a range that does not exceed an upper limit as payment in accordance with the post of the idea. The idea includes summary character data with a relatively small number of characters and detailed character data with a relatively large number of characters. In the first reading step, the third information processing program reads out a plurality of sets of the summary character data sorted according to the amount or index data, as the information, from the storage unit. In the first processing step, the third information processing program causes a display unit to display the plurality of sets of the summary character data read from the storage unit as a list sorted according to the amount or index data.

The second and third information processing programs may cause a computer to further execute the following three steps:
(B1) an acceptance step of accepting a selection of the summary character data on the list;
(B2) a second reading step of reading, from the storage unit, the detailed character data corresponding to the summary character data being the selection target accepted in the acceptance step; and
(B3) a second processing step of causing the display unit to display the detailed character data read out in the second reading step.

A fourth information processing program according to one embodiment of the present invention causes a computer to execute the following three steps. In the fourth information processing program, amount or index data may correspond to posting fee data of an idea.
(C1) a first acceptance step of accepting a post of an idea;
(C2) a second acceptance step of accepting fixed amount data equal to or greater than 500 yen, five dollars, or five euros, or index data corresponding to the fixed amount data, as payment in accordance with the post of the idea; and
(C3) an output step of outputting the idea accepted in the first acceptance step.

According to the information processing apparatus and the first to fourth information processing programs according to one embodiment of the present invention, it is possible to easily collect promising ideas, and easily find promising ideas from many collected ideas.

### BRIEF DESCRIPTION OF THE DRAWINGS

Fig. 1 is a diagram illustrating an example of a schematic configuration of an information processing system according to a first embodiment of the present invention.
Fig. 2 is a diagram illustrating an example of a schematic configuration of a terminal apparatus.
Fig. 3 is a diagram illustrating an example of a schematic configuration of the terminal apparatus.
Fig. 4 is a diagram illustrating an example of a schematic configuration of a terminal apparatus.
Fig. 5 is a diagram illustrating an example of a schematic configuration of a server apparatus.
Fig. 6 is a diagram illustrating an example of a database in a storage unit of Figs. 4 and 5.
Fig. 7 is a diagram illustrating an example of a schematic configuration of a terminal apparatus.
Fig. 8 is a diagram illustrating an example of a schematic configuration of the terminal apparatus.
Fig. 9 is a diagram illustrating an example of an input interface of the terminal apparatus.
Fig. 10 is a diagram illustrating an example of an input interface of the terminal apparatus.
Fig. 11 is a diagram illustrating an example of an input interface of the terminal apparatus.
Fig. 12 is a diagram illustrating an example of the input interface of the terminal apparatus.
Fig. 13 is a diagram illustrating an example of an input interface of the terminal apparatus.
Fig. 14 is a diagram illustrating a modification of a schematic configuration of the server apparatus.
Fig. 15 is a diagram illustrating a modification of the database in the storage unit of Figs. 4 and 5.
Fig. 16 is a diagram illustrating a modification of the database in the storage unit of Figs. 4 and 5.
Fig. 17 is a diagram illustrating an example of a schematic configuration of an information processing system according to a second embodiment of the present invention.

### DESCRIPTION OF PREFERRED EMBODIMENTS

Embodiments of the present invention are described in detail hereinafter with reference to the drawings.

### <1. First Embodiment>

### [Configuration 1]

Fig, 1 illustrates an example of a schematic configuration of an information processing system 1 according to one embodiment of the present invention. The information processing system 1 makes it possible to easily find promising ideas from many ideas solicited from an indefinite number of individuals, organizations, universities, companies, or the like, and is intended to consequently support the creation of hit products.

The information processing system 1 includes a terminal apparatus 200, a server apparatus 300, and a terminal apparatus 400, which are connected to a network 100.

### (Network 100)

The network 100 is, for example, a network that communicates through a communication protocol (TCP/IP) standardly used on the Internet. The network 100 may be, for example, a secure network that communicates through the network-specific communication protocol. The network 100 is, for example, the Internet, an intranet, or a local area network. The connection between the network 100 and the terminal apparatus 200, the server apparatus 300, or the terminal apparatus 400 is made in, for example, a wired LAN (Local Area Network) such as Ethernet, or a wireless LAN such as Wi-Fi, or a mobile phone line.

### (Terminal Apparatus 200)

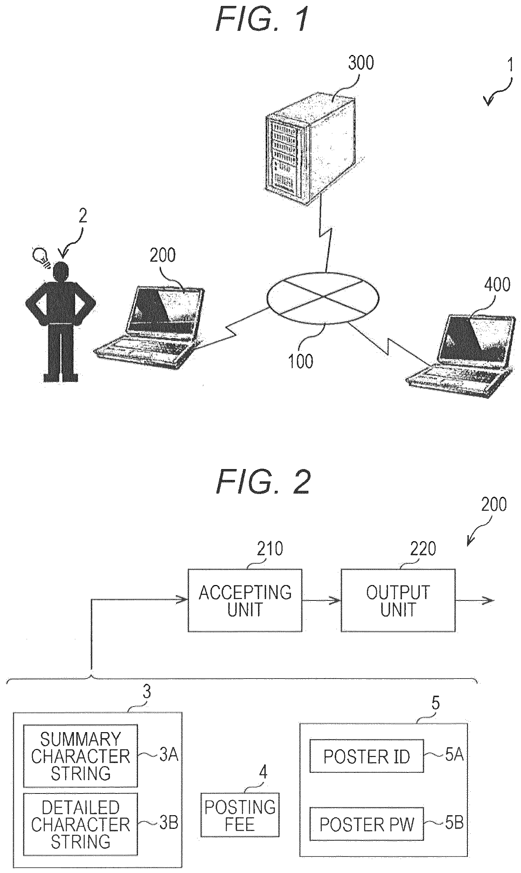

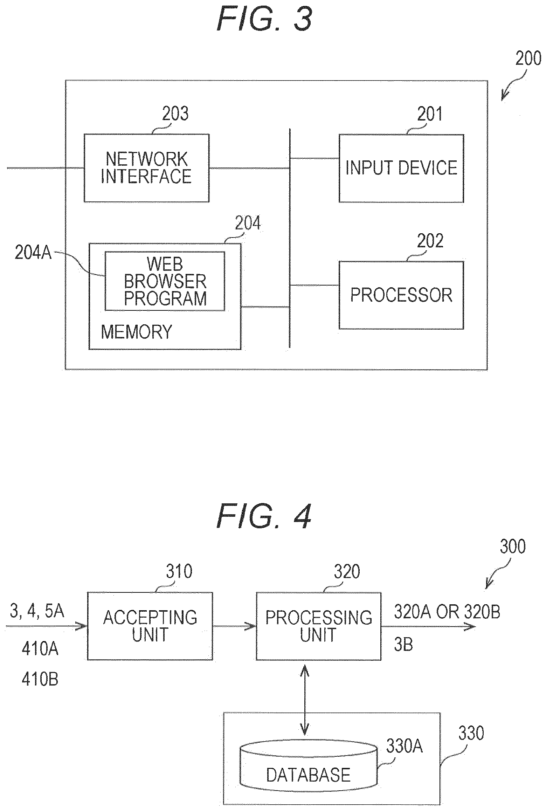

Figs. 2 and 3 illustrate an example of a schematic configuration of the terminal apparatus 200. The terminal apparatus 200 is a terminal apparatus that is used by a poster 2 to post an idea 3, and includes, for example, an accepting unit 210 and an output unit 220. The accepting unit 210 and the output unit 220 are configured including, for example, an input device 201, a processor 202, a network interface 203, and a memory 204. The input device 201 is configured by, for example, a keyboard or touch screen. The processor 202 executes, for example, a web browser program 204A and an operating system, which are stored in the memory 204. The network interface 203 is a communication interface for communicating with the server apparatus 300 via the network 100. The memory 204 stores, for example, programs that are executed by the processor 202 (such as the web browser program 204A and the operating system). The functions of the accepting unit 210 and the output unit 220 are realized by, for example, processing an application (such as html data) acquired from the server apparatus 300 through the web browser program 204A. An input interface of the accepting unit 210 (that is, an input interface of the input device 201) is realized by, for example, processing an application (such as html data) acquired from the server apparatus 300 through the web browser program 204A.

The idea 3 includes summary character data 3A with a relatively small number of characters and detailed character data 3B with a relatively large number of characters. The summary character data 3A is text explaining, for example, a title of the idea 3 or a summary of the idea 3. The detailed character data 3B is text explaining the content of the idea 3 in more detail than the summary character data 3A. The idea 3 may further include, for example, an illustration, a picture, or a design drawing related to the idea 3.

The accepting unit 210 accepts a post of the idea 3, and accepts amount data, or index data corresponding to the amount data, selected by the poster 2 from a plurality of options as a posting fee 4 for the idea 3. For example, when accepting a post of the idea 3, the accepting unit 210 requests the presentation (input) of the posting fee 4 for the idea 3 and accepts the presented (inputted) amount data or index data corresponding to the amount data as the posting fee 4 for the idea 3. The accepting unit 210 grants the poster 2 the right to decide the posting fee 4 for the idea 3, and accepts the arbitrary posting fee 4 presented (inputted) by the poster 2. The poster 2 pays the posting fee 4 to an operator of the information processing system 1 whenever posting the idea 3. Hence, the posting fee 4 has a nature like a measure of the usefulness of the idea 3. Therefore, the posting fee 4 is different from a monthly charge for use of the information processing system 1 (an idea posting service). Moreover, the posting fee 4 is also different from one having a nature like a reward that is paid by the operator of the information processing system 1 to the poster 2.

"Amount data selected by the poster 2 from a plurality of options" indicates, for example, amount data (for example, 8,000 yen) presented by the poster 2 himself/herself within a range (for example, 1 to 10,000 yen) that does not exceed a specified upper limit (for example, 10,000 yen). "Index data corresponding to the amount data" is a concept including, for example, points with a monetary value (for example, points where one point is worth one yen), and ranks representing the amount data in stages (for example, rank A: 10,000 yen, rank B: 5,000 yen, and rank C: 1,000 yen). Therefore, if the posting fee 4 is expressed in points, "index data corresponding to the amount data selected by the poster 2 from a plurality of options" indicates, for example, points (for example, 8,000 points) presented by the poster 2 himself/herself within a range (for example, 1 to 10,000 points) that does not exceed a specified upper limit (for example, 10,000 points). If the posting fee 4 is expressed in amount data or points, the accepting unit 210 may or may not restrict the upper limit of the amount data or points selected by the poster 2. The unit of the amount data may be a unit other than yen (for example, dollar or euro).

When accepting a post of the idea 3, the accepting unit 210 may present one or more parameters related to the self-evaluation of the idea 3, and accept amount data, or its corresponding index data, in accordance with the selection result of the evaluation level based on the presented one or more parameters. Here, examples of the one or more parameters include at least one of artistic quality, predicted volume of sales, utility, innovativeness, realizability, advancedness, trend, penetration, and urgency.

At the time of posting the idea 3, the accepting unit 210 accepts information on the poster 2 (poster information 5). The poster information 5 includes, for example, a poster ID (identity) (5A) and a poster PW (password) (5B). The accepting unit 210 may permit posting the idea 3 only when the poster information 5 matches, for example, information registered in the server apparatus 300.

The output unit 220 outputs the idea 3 accepted by the accepting unit 210, associating the idea 3 with the posting fee 4 accepted by the accepting unit 210. The output unit 220 outputs a file including, for example, the idea 3, the posting fee 4, and the poster ID (5A), which have been accepted by the accepting unit 210, to the server apparatus 300 via the network 100.

### (Server Apparatus 300)

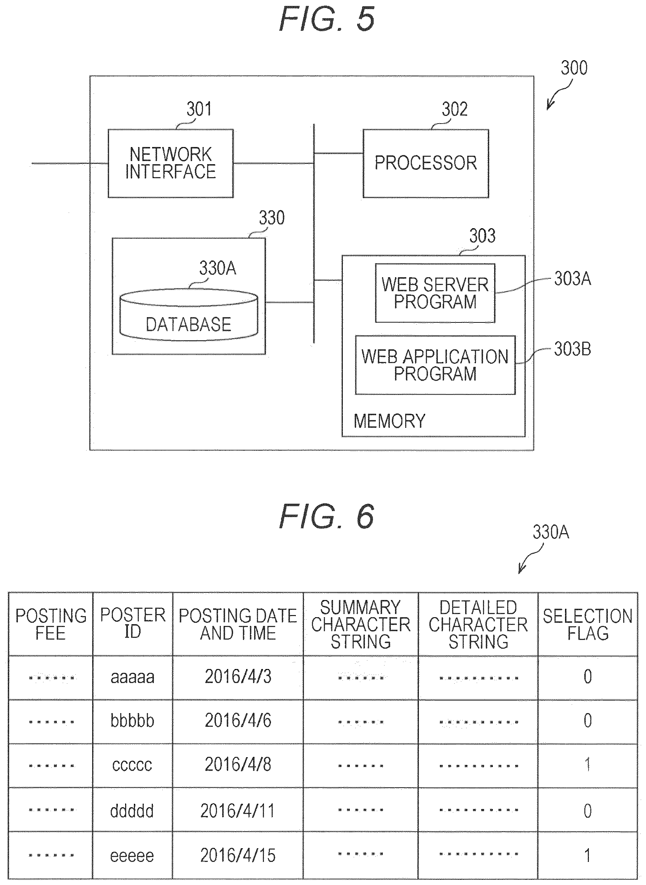

Figs. 4 and 5 illustrate an example of a schematic configuration of the server apparatus 300. The server apparatus 300 is a server apparatus that stores many accepted ideas 3, and extracts and outputs a necessary idea 3 from the many stored ideas 3. The server apparatus 300 includes, for example, an accepting unit 310, a processing unit 320, and a storage unit 330. The storage unit 330 may be implemented on another apparatus physically different from the server apparatus 300.

The accepting unit 310 and the processing unit 320 are configured including, for example, a network interface 301, a processor 302, and a memory 303. The network interface 301 is a communication interface for communicating with the terminal apparatus 200 or 400 via the network 100. The processor 302 executes, for example, a web server program 303A and a web application program 303B, which are stored in the memory 303. The memory 303 stores, for example, programs that are executed by the processor 302 (such as the web server program 303A and the web application program 303B). The functions of the accepting unit 310 and the processing unit 320 are realized by, for example, the processor 302 executing the web server program 303A and the web application program 303B.

The accepting unit 310 accepts the posted idea 3, and the amount data, or its corresponding index data, selected by the poster 2 of the idea 3 as the posting fee 4 for the idea 3 from the plurality of options. For example, the accepting unit 310 accepts the posted idea 3, associating the idea 3 with the amount data, or its corresponding index data, selected by the poster 2 of the idea 3 as the posting fee 4 for the idea 3 from the plurality of options. The accepting unit 310 accepts the file including, for example, the idea 3, the posting fee 4, and the poster ID (5A) from the terminal apparatus 200 via the network 100.

The processing unit 320 stores the idea 3 accepted by the accepting unit 310 in the storage unit 330, associating the idea 3 with the posting fee 4 accepted by the accepting unit 310. For example, the processing unit 320 stores the idea 3 accepted by the accepting unit 310 in a database 330A in the storage unit 330, associating the idea 3 with the posting fee 4 accepted by the accepting unit 310. The storage unit 330 includes the database 330A. Many ideas 3 posted by the posters 2 are associated with their posting fees 4 and stored in the database 330A. The storage unit 330 includes, for example, the poster information 5.

Fig. 6 schematically illustrates an example of the database 330A. In the database 330A, the idea 3 including the summary character data 3A and the detailed character data 3B is associated with, for example, the posting fee 4, a poster ID, a posting date and time, and a selection flag. The posting date and time is, for example, the date and time when the accepting unit 310 accepts the idea 3. For example, when writing the idea 3 into the database 330A, the processing unit 320 also writes the posting date and time into the database 330A. The selection flag indicates, for example, whether or not "a selection of the idea 3 (the summary character data 3A)" described below has been made. In Fig. 4, the selection flag = 0 indicates "a selection of the idea 3 (the summary character data 3A)" described below has not been made, and the selection flag = 1 indicates "a selection of the idea 3 (the summary character data 3A)"described below has been made.

The database 330A is not limited to the configuration of Fig. 6. Instead of the selection flag, one having a role similar to the selection flag may be provided to the database 330A. Moreover, the posting date and time may be omitted in the database 330A. Moreover, those that are not described in Fig. 6 may be included in the database 330A.

The processing unit 320 outputs a plurality of sets of the summary character data 3A as a first list 320A associated with the posting fees 4, or as a second list 320B sorted according to the posting fee 4, from the database 330A in the storage unit 330 at a request (specifically, a transmission request 410A described below) of the terminal apparatus 400. The second list 320B may or may not include the posting fees 4 associated respectively with the sets of the summary character data 3A.

When the accepting unit 310 has accepted the selection of the summary character data 3A on the first list 320A or the second list 320B (specifically, a transmission request 410B described below), the processing unit 320 reads and outputs the detailed character data 3B corresponding to the summary character data 3A being the selection target accepted by the accepting unit 310, from the database 330A in the storage unit 330. At this point in time, the processing unit 320, for example, sets 1 for the selection flag corresponding to the summary character data 3A being the selection target accepted by the accepting unit 310. When a request (specifically, the transmission request 410A described below) has been made by the terminal apparatus 400 after the selection of the summary character data 3A, the processing unit 320 outputs the summary character data 3A without the summary character data 3A being the selection target accepted by the accepting unit 310, as the first list 320A or the second list 320B. For example, the processing unit 320 outputs the summary character data 3A to which the selection flag = 0 is applicable among the plurality of sets of the summary character data 3A included in the database 330A in the storage unit 330, as the first list 320A associated with the posting fees 4, or as the second list 320B sorted according to the posting fee 4 at the request (specifically, the transmission request 410A described below) of the terminal apparatus 400. In other words, when a request (specifically, the transmission request 410A described below) has been made by the terminal apparatus 400 after the selection of the summary character data 3A, the processing unit 320 deletes the summary character data 3A being the selection target from the first list 320A or the second list 320B.

When a request (specifically, the transmission request 410A described below) has been made by the terminal apparatus 400 after a predetermined condition has been satisfied in the summary character data 3A being the selection target, the processing unit 320 outputs the summary character data 3A including the summary character data 3A that has satisfied the predetermined condition as the first list 320A or the second list 320B. Here, examples of the "predetermined condition" include conditions described in the following (a), (b), and (c):
(a) A fixed period passes since the selection of the summary character data 3A.
(b) No application for an update is made within a predetermined period after the selection of the summary character data 3A.
(c) An application for a non-update is made after the selection of the summary character data 3A.

For example, when the summary character data 3A being the selection target satisfies the predetermined condition, the processing unit 320 changes, to 0, the selection flag associated with the summary character data 3A that satisfies the predetermined condition among the plurality of sets of the summary character data 3A included in the database 330A in the storage unit 330. Next, the processing unit 320 outputs, for example, the summary character data 3A with the selection flag = 0 among the plurality of sets of the summary character data 3A included in the database 330A in the storage unit 330, as the first list 320A associated with the posting fees 4, or as the second list 320B sorted according to the posting fee 4. In other words, the processing unit 320 reinstates the summary character data 3A that satisfies the predetermined condition on the first list 320A or the second list 320B after the summary character data 3A being the selection target satisfies the predetermined condition.

### (Terminal Apparatus 400)

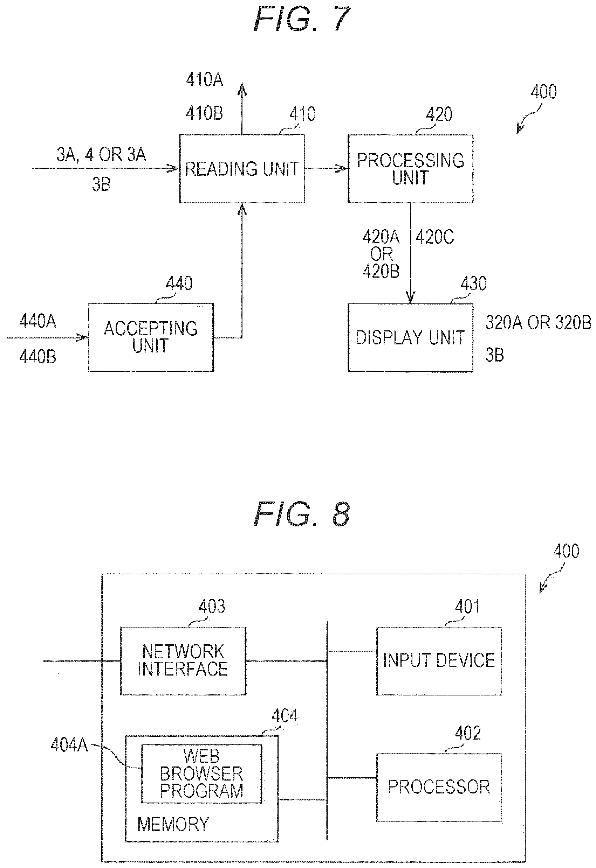

Figs. 7 and 8 illustrate an example of a schematic configuration of the terminal apparatus 400. The terminal apparatus 400 is, for example, a terminal apparatus that is used by a company's person in charge to search for an idea necessary to develop the company's own unique product. The terminal apparatus 400 includes, for example, a reading unit 410 that reads information from the storage unit 330, a processing unit 420 that processes the information read by the reading unit 410, and a display unit 430 that displays the information processed by the processing unit 420. The display unit 430 is configured including, for example, a display panel that displays video on the basis of a video signal from the processing unit 420. The terminal apparatus 400 further includes, for example, an accepting unit 440 that accepts the input of the company's person in charge.

The reading unit 410, the processing unit 420, the display unit 430, and the accepting unit 440 are configured including, for example, an input device 401, a processor 402, a network interface 403, and a memory 404. The input device 401 is configured by, for example, a keyboard or touch screen. The processor 402 executes, for example, a web browser program 404A and an operating system, which are stored in the memory 404. The network interface 403 is a communication interface for communicating with the server apparatus 300 via the network 100. The memory 404 stores, for example, programs that are executed by the processor 402 (such as the web browser program 404A and the operating system). The functions of the reading unit 410, the processing unit 420, the display unit 430, and the accepting unit 440 are realized by, for example, processing an application (such as html data) acquired from the server apparatus 300 through the web browser program 404A. An input interface of the accepting unit 440 and the display unit 430 (that is, an input interface of the input device 401) is realized by, for example, processing an application (such as html data) acquired from the server apparatus 300 through the web browser program 404A.

The reading unit 410 reads a plurality of sets of the summary character data 3A and a plurality of the posting fees 4 corresponding respectively to the sets of the summary character data 3A, as information in the storage unit 330, from the storage unit 330. For example, the accepting unit 440 accepts a read request 440A for the information in the storage unit 330. The accepting unit 440 then notifies the reading unit 410 of the acceptance of the read request 440A. When having received such a notification, the reading unit 410 transmits the transmission request 410A for the information in the storage unit 330 to the server apparatus 300 via the network 100. The reading unit 410 receives the information (the plurality of sets of the summary character data 3A and the plurality of the posting fees 4 corresponding respectively to the sets of the summary character data 3A) read by the processing unit 320 from the database 330A in the storage unit 330, via the network 100, at the transmission request 410A.

The processing unit 420 causes the display unit 430 to display the plurality of sets of the summary character data 3A read from the storage unit 330, as the first list 320A associated with the posting fees 4, or as the second list 320B sorted according to the posting fee 4. For example, the processing unit 420 transmits, to the display unit 430, a video signal 420A that causes the display unit 430 to display the plurality of sets of the summary character data 3A read from the storage unit 330 as the first list 320A associated with the posting fees 4, or transmits, to the display unit 430, a video signal 420B that causes the display unit 430 to display the plurality of sets of the summary character data 3A read from the storage unit 330 as the second list 320B sorted according to the posting fee 4. The display unit 430 then displays the first list 320A or the second list 320B on the basis of the video signal 420A or the video signal 420B inputted from the processing unit 420.

The accepting unit 440 accepts a selection 440B of the summary character data 3A on the first list 320A or the second list 320B. When having accepted the selection 440B, the accepting unit 440 notifies the reading unit 410 of the acceptance of the selection 440B. When having received such a notification, the reading unit 410 reads the detailed character data 3B corresponding to the summary character data 3A being the target of the selection 440B accepted by the accepting unit 440, from the database 330A in the storage unit 330. For example, when having received, from the accepting unit 440, the notification to the effect that the selection 440B had been accepted, the reading unit 410 transmits the transmission request 410B for the detailed character data 3B corresponding to the summary character data 3A being the target of the selection 440B accepted by the accepting unit 440, to the server apparatus 300 via the network 100. The reading unit 410 receives the detailed character data 3B read by the processing unit 320 from the database 330A in the storage unit 330 at the transmission request 410B, via the network 100.

The processing unit 420 causes the display unit 430 to display the detailed character data 3B read from the storage unit 330. For example, the processing unit 420 transmits, to the display unit 430, a video signal 420C that causes the display unit 430 to display the detailed character data 3B read from the storage unit 330. The display unit 430 then displays the detailed character data 3B on the basis of the video signal 420C inputted from the processing unit 420.

### [Operation]

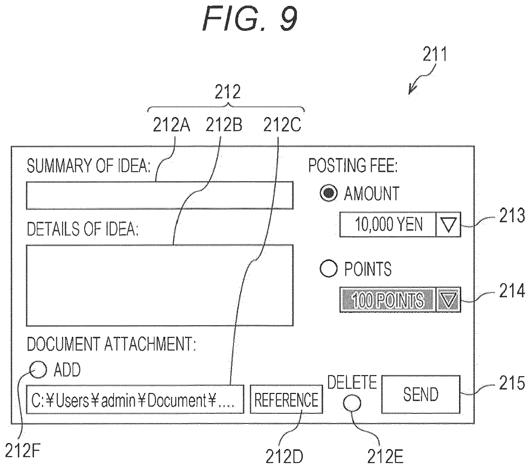

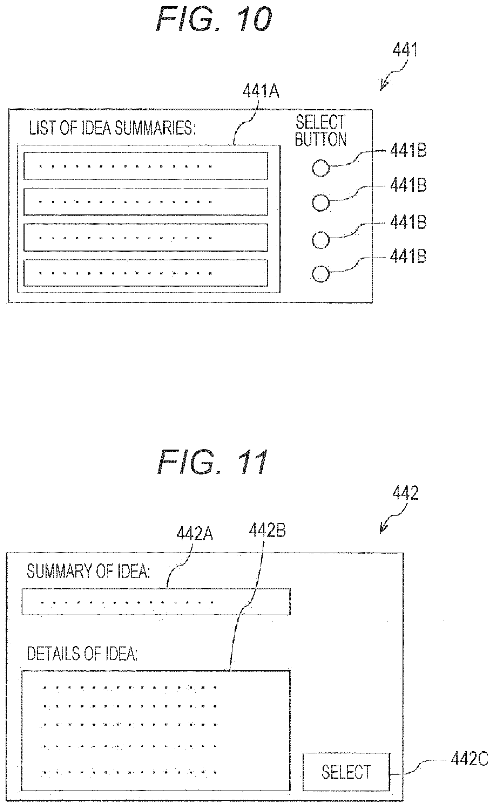

Next, the operation of the information processing system 1 according to the embodiment is described. Fig. 9 illustrates an example of an input interface 211 of the accepting unit 210 (that is, an input interface of the input device 201). Figs. 10 and 11 illustrate an example of input interfaces 441 and 442 of the accepting unit 440 and the display unit 430 (that is, input interfaces of the input device 401).

The input interface 211 includes, for example, a posting window 212 that accepts the input of the idea 3, select buttons 213 and 214 that accept the input of the posting fee 4, and a send button 215 that transmits the idea 3. The posting window 212 includes, for example, a posting window 212A that accepts the input of the summary character data 3A, a posting window 212B that accepts the input of the detailed character data 3B, and a posting window 212C that accepts the attachment of materials (for example, a design data file or presentation materials). The posting window 212 may further include, for example, a reference button 212D for address reference to support input into the posting window 212C, a delete button 212E that deletes the posting window 212C, and an add button 212F that adds the posting window 212C. Instead of the posting window 212C, a posting window that accepts the input of more detailed data (for example, a specific example of the idea 3) than the detailed character data 3B may be provided. The select button 213 is, for example, a button for selecting amount data from a plurality of options. The select button 214 is, for example, a button for selecting index data corresponding to the amount data from a plurality of options.

The input interface 441 includes, for example, a summary display window 441A that displays, in a list form, a plurality of sets of the summary character data 3A read from the storage unit 330, and a plurality of select buttons 441B assigned, one by one, to the sets of the summary character data 3A displayed in the summary display window 441A. The input interface 442 includes, for example, a summary display window 442A that displays the summary character data 3A corresponding to the select button 441B selected on the input interface 441, a details display window 442B that displays the detailed character data 3B corresponding to the summary character data 3A displayed in the summary display window 442A, and a select button 442C.

Firstly, the poster 2 inputs the poster information 5 into the accepting unit 210 of the terminal apparatus 200. The accepting unit 210 then accepts the poster information 5. At this point in time, the accepting unit 210, for example, checks the accepted poster information 5 against information (the poster information 5) registered in the server apparatus 300 and, if matching information is found in the server apparatus 300 as a result of the check, permits posting the idea 3. In other words, the accepting unit 210 displays the input interface 211 on a display screen.

Next, the poster 2 posts the idea 3 to the accepting unit 210, and selects amount data or it corresponding index data from a plurality of options. For example, the poster 2 posts the idea 3 through the posting window 212, and selects amount data or its corresponding index data from a plurality of options through the select button 213 or 214. The accepting unit 210 then accepts the post of the idea 3 and accepts the amount data, or its corresponding index data, selected by the poster 2 from the plurality of options as the posting fee 4 for the idea 3.

Next, the output unit 220 outputs the idea 3 accepted by the accepting unit 210 to the server apparatus 300, associating the idea 3 with the posting fee 4 accepted by the accepting unit 210. The accepting unit 310 of the server apparatus 300 then accepts the posted idea 3 and the amount data, or its corresponding index data, selected by the poster 2 of the idea 3 as the posting fee 4 for the idea 3 from the plurality of options. Next, the processing unit 320 stores the idea 3 accepted by the accepting unit 310 in the database 330A in the storage unit 330, associating the idea 3 with the posting fee 4 accepted by the accepting unit 310.

When many posters 2 have posted the ideas 3, each posted idea 3 is stored in the database 330A in the storage unit 330, associated with its corresponding posting fee 4 through steps similar to the above ones.

A company's person in charge (a person A) makes the read request 440A for information in the storage unit 330 to the accepting unit 440 of the terminal apparatus 400. The reading unit 410 of the terminal apparatus 400 then reads, from the storage unit 330, a plurality of sets of the summary character data 3A and a plurality of the posting fees 4 corresponding respectively to the sets of the summary character data 3A as the information in the storage unit 330. The processing unit 420 of the terminal apparatus 400 causes the display unit 430 to display the plurality of sets of the summary character data 3A read from the storage unit 330 as the first list 320A associated with the posting fees 4, or as the second list 320B sorted according to the posting fee 4. For example, the processing unit 420 of the terminal apparatus 400 displays the first list 320A or the second list 320B in the summary display window 441A.

The person A makes the selection 440B of the summary character data 3A on the first list 320A or the second list 320B to the accepting unit 440 of the terminal apparatus 400. For example, the person A selects the select button 441B corresponding to one set of the summary character data 3A from the first list 320A or the second list 320B displayed in the summary display window 441A. The reading unit 410 then reads, from the storage unit 330, the detailed character data 3B corresponding to the summary character data 3A being the target of the selection 440B accepted by the accepting unit 440. The processing unit 420 displays the read detailed character data 3B on the display unit 430. For example, the processing unit 420 displays, in the summary display window 442A, the summary character data 3A being the target of the selection 440B accepted by the accepting unit 440, and displays, in the details display window 442B, the detailed character data 3B read from the storage unit 330. At this point in time, the selection flag corresponding to the summary character data 3A being the target of the selection 440B accepted by the accepting unit 310 is changed to 1.

Another company's person in charge (a person B) makes the read request 440A for information in the storage unit 330 to the accepting unit 440 of the terminal apparatus 400 afterwards. A plurality of sets of the summary character data 3A and a plurality of the posting fees 4 corresponding respectively to the sets of the summary character data 3A are then read as the information in the storage unit 330 from the storage unit 330. In other words, the first list 320A or the second list 320B is outputted from the processing unit 320 of the server apparatus 300 to the terminal apparatus 400 of the person B.

At this point in time, the summary character data 3A without the summary character data 3A being the target of the selection 440B is outputted as the first list 320A or the second list 320B. For example, the summary character data 3A to which the selection flag = 0 is applicable among the plurality of sets of the summary character data 3A included in the database 330A in the storage unit 330 is outputted as the first list 320A associated with the posting fees 4, or as the second list 320B sorted according to the posting fee 4. In other words, the summary character data 3A that was present on the first list 320A or the second list 320B before the summary character data 3A was selected is deleted.

After the predetermined condition is satisfied afterwards, the person B makes the read request 440A for information in the storage unit 330 to the accepting unit 440 of the terminal apparatus 400. A plurality of sets of the summary character data 3A and a plurality of the posting fees 4 corresponding respectively to the sets of the summary character data 3A are then read as the information in the storage unit 330 from the storage unit 330. For example, when the predetermined condition is satisfied, the selection flag associated with the summary character data 3A that satisfies the predetermined condition among a plurality of sets of the summary character data 3A included in the database 330A in the storage unit 330 is changed to 0. For example, when the read request 440A for information in the storage unit 330 has been made afterwards, the summary character data 3A with the selection flag = 0 among the plurality of sets of the summary character data 3A included in the database 330A in the storage unit 330 is outputted as the first list 320A associated with the posting fees 4, or as the second list 320B sorted according to the posting fee 4. In other words, the summary character data 3A deleted previously is reinstated on the first list 320A or the second list 320B.

### [Effects]

Next, the effects of the information processing system 1 according to the embodiment are described.

In recent years, attention has been given to a development method called open innovation that companies actively adopt external ideas and inventions and develop new products and services. In order to realize open innovation, a company itself needs to look for a necessary external idea. However, a search for an external idea is not easy. Therefore, a system for acquiring necessary external ideas has been proposed in, for example, Patent Document 1.

However, it is not easy to find a promising idea from many good and bad ideas. A method such as the ranking of collected ideas based on the number of votes of many evaluators is conceivable. However, if such a method is used, the judging skills of the evaluators are reflected on the ranking, and an idea like a rough diamond may not be appropriately evaluated and may remain obscure. Moreover, it takes very much time and effort to evaluate many ideas. Accordingly, it is very difficult to keep bearing the manpower and cost for operating this system.

On the other hand, in the information processing system 1 according to the embodiment, a post of the idea 3 is accepted, and also amount data, or its corresponding index data, selected by the poster 2 of the idea 3 from a plurality of options is accepted as the posting fee 4 for the idea 3. The accepted idea 3 is then outputted, associated with the accepted posting fee 4. Here, the value of the posting fee 4 has a large correlation with the degree of enthusiasm of the poster 2 for the idea 3, that is, the degree of promise of the idea 3. Hence, when many posted ideas 3 are sorted according to the amount of the posting fee 4, more promising ideas 3 are sorted to higher ranks on the list, and staler ideas 3 are sorted to lower ranks on the list. Therefore, a company's person in charge who uses the terminal apparatus 400 preferentially checks high ranks on the list where many good and bad ideas 3 have been sorted according to the amount of the posting fee 4 and accordingly can reach a promising idea 3 easily.

In this manner, in the embodiment, when many ideas 3 are listed, an evaluation (judging skill) of an evaluator is not used but the value of the posting fee 4 is used. In other words, the idea 3 is not the target that is evaluated by an evaluator (the evaluation target). Accordingly, it is possible to extremely reduce the manpower and cost for the operation of the system as compared to a system where the idea 3 is the target that is evaluated by an evaluator (the evaluation target). Therefore, a promising idea 3 can be easily found from many collected ideas 3.

Moreover, in the embodiment, a plurality of sets of the summary character data 3A read from the storage unit 330 is outputted as the first list 320A associated with the posting fees 4, or as the second list 320B sorted according to the posting fee 4. Consequently, a company's person in charge can reach a promising idea 3 easily, simply by preferentially checking high ranks on the list in a state where many good and bad ideas 3 (the summary character data 3A) are sorted according to the amount of the posting fee 4. Therefore, a promising idea 3 can be easily found from many collected ideas 3.

Moreover, in the embodiment, the detailed character data 3B corresponding to the summary character data 3A being a selection target accepted by the accepting unit 310 is read and outputted from the storage unit 320. Consequently, detailed contents of only the ideas 3 of interest on the list can be checked. Accordingly, a promising idea 3 can be easily reached as compared to a case where each idea 3 is written in detail from the beginning. Therefore, a promising idea 3 can be easily found from many collected ideas 3.

Moreover, in the embodiment, after the selection of the summary character data 3A, the summary character data 3A without the summary character data 3A being the selection target accepted by the accepting unit 310 is outputted as the first list 320A or the second list 320B. In other words, after the selection of the summary character data 3A, the summary character data 3A being the selection targeted accepted by the accepting unit 310 is deleted from the first list 320A or the second list 320B. Consequently, a company's person in charge does not need to spare unfruitful man-hours for the idea 3 that another company has already started working on (is under consideration). Therefore, a promising idea 3 can be easily found from many collected ideas 3.

Moreover, in the embodiment, when the predetermined condition is satisfied after the summary character data 3A without the summary character data 3A being a selection target accepted by the accepting unit 310 is outputted as the first list 320A or the second list 320B, the summary character data 3A including the summary character data 3A being the selection target accepted by the accepting unit 310 is outputted as the first list 320A or the second list 320B. In other words, when the predetermined condition is satisfied, the summary character data 3A being the selection target accepted by the accepting unit 310 is reinstated on the first list 320A or the second list 320B. Consequently, a company's person in charge can consider whether or not the idea 3 parted by another company is promising for the company. Therefore, a promising idea 3 can be easily found from many collected ideas 3.

### <2. Modifications of First Embodiment>

### (Modification A)

In the first embodiment, the idea 3 includes the summary character data 3A with a relatively small number of characters, and the detailed character data 3B with a relatively large number of characters. However, the idea 3 may include, for example, the summary character data 3A, the detailed character data 3B, and more detailed explanatory data 3C than the detailed character data 3B. The explanatory data 3C may include, for example, an illustration, a picture, and a design drawing of the idea 3. At this point, for example, the input interface 211 of the accepting unit 210 (that is, the input interface of the input device 201) may accept the explanatory data 3C through the posting window 212C.

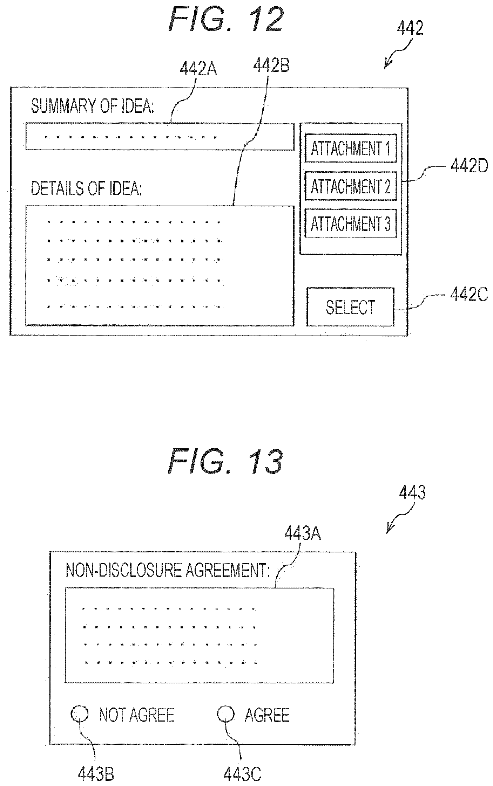

Fig. 12 illustrates a modification of the input interface 442 of the accepting unit 440 and the display unit 430 (that is, the input interface of the input device 401). The input interface 442 further includes, for example, a select button 442D that allows the selection of display of the explanatory data 3C accepted through the posting window 212C.

In this modification, the select button 442D that allows the selection of display of the explanatory data 3C is provided. Consequently, the display of the idea 3 can be displayed in stages. Accordingly, it becomes possible to, for example, cause some event to occur at the time of selecting the explanatory data 3C.

### (Modification B)

In the first embodiment and the modification thereof, when the summary character data 3A has been selected from the first list 320A or the second list 320B, the processing unit 420 may request a user to conclude a non-disclosure agreement on the idea 3 corresponding to the selected summary character data 3A. For example, when the select button 441B has been selected on the input interface 441, the processing unit 420 may, for example, cause the display unit 430 to display an input interface 443 on top of, or instead of, the input interface 441 as illustrated in Fig. 13. The input interface 443 is for requesting a user to conclude the non-disclosure agreement on the idea 3 corresponding to the selected summary character data 3A. The input interface 443 includes, for example, an agreement text display window 443A that displays a non-disclosure agreement document, a cancel button 443B indicating not agreeing to the non-disclosure agreement, and an agree button 443C indicating agreeing to the non-disclosure agreement.

When having accepted a user's agreement on the conclusion of the non-disclosure agreement, the processing unit 420 may cause the display unit 430 to display the detailed character data 3B of the idea 3 being the target of the non-disclosure agreement. For example, when the agree button 443C has been selected, the processing unit 420 may cause the display unit 430 to display the detailed character data 3B of the idea 3 being the target of the non-disclosure agreement. At this point in time, for example, the processing unit 420 displays the detailed character data 3B of the idea 3 being the target of the non-disclosure agreement in the details display window 442B of the input interface 442. For example, the display unit 430 displays the detailed character data 3B of the idea 3 being the target of the non-disclosure agreement in the details display window 442B of the input interface 442 at the instruction of the processing unit 420.

At this point in time, when having further accepted a request to disclose the explanatory data 3C of the idea 3 corresponding to the detailed character data 3B displayed in the details display window 442B of the input interface 442, the processing unit 420 may display the requested explanatory data 3C on the display unit 430. For example, when the select button 442C has been selected, the processing unit 420 may display the requested explanatory data 3C on the display unit 430. For example, the display unit 430 may display the select button 442D in the details display window 442B of the input interface 442 at the instruction of the processing unit 420, and display the explanatory data 3C in response to the selection of the select button 442D by the user.

In this modification, when the select button 441B has been selected on the input interface 441, a user is requested to conclude a non-disclosure agreement on the idea 3 corresponding to the selected summary character data 3A, which can prevent the user from viewing the detailed character data 3B of the idea 3 unnecessarily and also prevent the detailed character data 3B viewed by the user from leaking out to a third party.

In this modification, the selection flag may be changed from 0 to 1 not at the time of selecting the summary character data 3A but at the time of accepting the request to disclose the explanatory data 3C. In such a case, not only can the display of the idea 3 be displayed in stages but also the conclusion of a non-disclosure agreement can be requested for display of the idea 3 in each stage and a display of the summary character data 3A can be deleted.

### (Modification C)

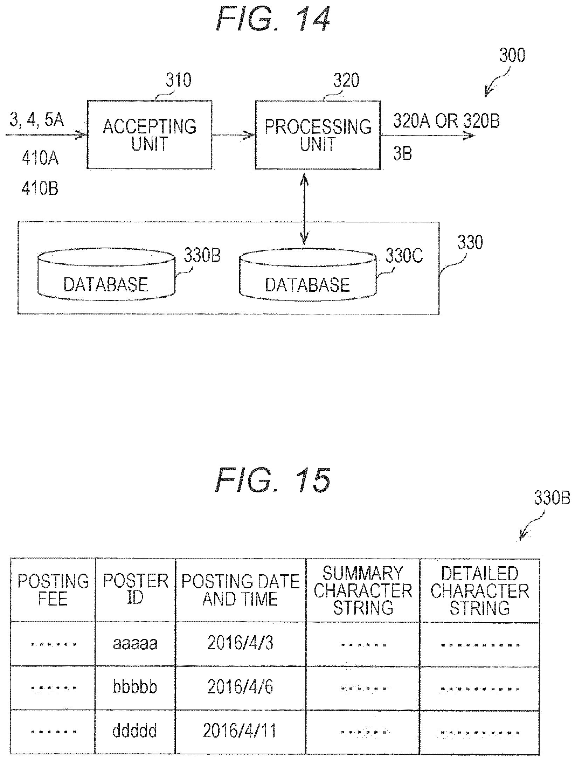

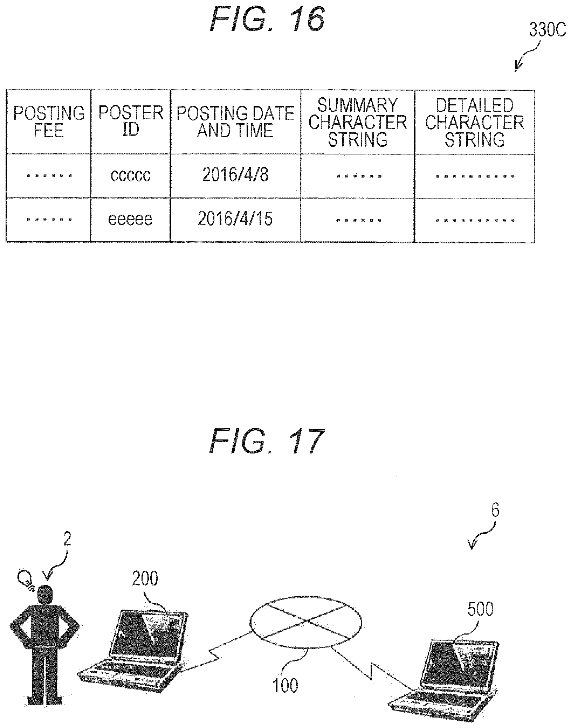

Fig. 14 illustrates a modification of a schematic configuration of the server apparatus 300. An information processing apparatus 1 of this modification includes a database 330B instead of the database 330A, and further includes a database 330C. Fig. 15 schematically illustrates an example of the database 330B. Fig. 16 schematically illustrates an example of the database 330C.

The database 330B can be accessed from the terminal apparatus 400. In the database 330B, the idea 3 including the summary character data 3A and the detailed character data 3B is associated with, for example, the posting fee 4, a poster ID, and a posting date and time. In other words, the database 330B corresponds to the database 330A without the selection flag in the embodiment. Moreover, the idea 3 with the selection flag = 1 and data (for example, the posting fee 4, a poster ID, and a posting date and time) associated with the idea 3 in the database 330A in the embodiment have been deleted in the database 330B.

The database 330C is not accessed from the terminal apparatus 400. In the database 330C, the idea 3 including the summary character data 3A and the detailed character data 3B is associated with, for example, the posting fee 4, a poster ID, and a posting date and time. In other words, the database 330C has the same structure as the database 330B. However, the database 330C includes the idea 3 with the selection flag = 1 and data (for example, the posting fee 4, the poster ID, and the posting date and time) associated with the idea 3 in the database 330A in the embodiment.

In this modification, when the accepting unit 310 has accepted a selection of the summary character data 3A on the first list 320A or the second list 320B (specifically, the transmission request 410B described below), the processing unit 320 moves the idea 3 including the summary character data 3A being the selection target accepted by the accepting unit 310 and the detailed character data 3B, and data (for example, the posting fee 4, a poster ID, and a posting date and time) associated with the idea 3 from the database 330B to the database 330C. The processing unit 320 further reads and outputs, from the database 330C, the detailed character data 3B corresponding to the summary character data 3A being the selection target accepted by the accepting unit 310.

After reading, from the database 330B, the detailed character data 3B corresponding to the summary character data 3A being the selection target accepted by the accepting unit 310, the processing unit 320 may move the idea 3 including the summary character data 3A being the selection target accepted by the accepting unit 310 and the detailed character data 3B, and data (for example, the posting fee 4, a poster ID, and a posting date and time) associated with the idea 3 from the database 330B to the database 330C.

When a request (specifically, the transmission request 410A described below) has been made by the terminal apparatus 400 after the selection of the summary character data 3A, the processing unit 320 outputs the summary character data 3A without the summary character data 3A being the selection target accepted by the accepting unit 310, as the first list 320A or the second list 320B. For example, the processing unit 320 outputs a plurality of sets of the summary character data 3A included in the database 330B in the storage unit 330, as the first list 320A associated with the posting fees 4, or as the second list 320B sorted according to the posting fee 4, at the request (specifically, the transmission request 410A described below) of the terminal apparatus 400. In other words, when a request (specifically, the transmission request 410A described below) has been made by the terminal apparatus 400 after the selection of the summary character data 3A, the processing unit 320 deletes the summary character data 3A being the selection target from the first list 320A or the second list 320B.

In this modification, after the selection of the summary character data 3A, the summary character data 3A without the summary character data 3A being the selection target accepted by the accepting unit 310 is outputted as the first list 320A or the second list 320B as in the embodiment. In other words, after the selection of the summary character data 3A, the summary character data 3A being the selection target accepted by the accepting unit 310 is deleted from the first list 320A or the second list 320B. Consequently, a company's person in charge does not need to spare unfruitful man-hours for the idea 3 that another company has already started working on (is under consideration). Therefore, a promising idea 3 can be easily found from many collected ideas 3.

Moreover, in this modification, when the predetermined condition is satisfied after the summary character data 3A without the summary character data 3A being a selection target accepted by the accepting unit 310 is outputted as the first list 320A or the second list 320B, the summary character data 3A including the summary character data 3A that satisfies the predetermined condition is outputted as the first list 320A or the second list 320B. Specifically, when the predetermined condition is satisfied, the processing unit 320 moves the idea 3 including the summary character data 3A that satisfies the predetermined condition and the detailed character data 3B, and data (for example, the posting fee 4, a poster ID, and a posting date and time) associated with the idea 3 from the database 330C to the database 330B. In other words, when the predetermined condition is satisfied, the summary character data 3A that satisfies the predetermined condition is reinstated on the first list 320A or the second list 320B. Consequently, a company's person in charge can consider whether or not the idea 3 parted by another company is promising for the company. Therefore, a promising idea 3 can be easily found from many collected ideas 3.

### (Modification D)

In the information processing system 1 according to the embodiment and the modifications thereof, the reading unit 410 may read a plurality of sets of the summary character data 3A sorted according to the posting fee 4 as information in the storage unit 330 from the storage unit 330. For example, the accepting unit 440 accepts the read request 440A for the information in the storage unit 330. The accepting unit 440 then notifies the reading unit 410 of the acceptance of the read request 440A. When having received such a notification, the reading unit 410 transmits the transmission request 410A for the information in the storage unit 330 to the server apparatus 300 via the network 100. The processing unit 320 of the server apparatus 300 reads information (a plurality of sets of the summary character data 3A and a plurality of the posting fees 4 corresponding respectively to the sets of the summary character data 3A) from the database 330A in the storage unit 330 at the transmission request 410A, and sorts the read plurality of sets of the summary character data 3A according to the posting fee 4. The processing unit 320 further outputs the plurality of sets of the summary character data 3A sorted according to the posting fee 4 to the terminal apparatus 400 via the network 100.

At this point in time, the processing unit 320 may output the plurality of sets of the summary character data 3A sorted according to the posting fee 4 to the terminal apparatus 400, associating the plurality of sets of the summary character data 3A with their posting fees 4. Moreover, the processing unit 320 may output, to the terminal apparatus 400, the plurality of sets of the summary character data 3A sorted according to the posting fee 4 without including information on the posting fees 4.

The reading unit 410 of the terminal apparatus 400 receives the plurality of sets of the summary character data 3A sorted according to the posting fee 4 from the terminal apparatus 400 via the network 100. At this point in time, the reading unit 410 may receive the plurality of sets of the summary character data 3A sorted according to the posting fee 4 from the terminal apparatus 400, associating the plurality of sets of the summary character data 3A with their posting fees 4. Moreover, the reading unit 410 may receive, from the terminal apparatus 400, the plurality of sets of the summary character data 3A according to the posting fee 4 without including information on the posting fees 4.

In this modification, the plurality of sets of the summary character data 3A read from the storage unit 330 is outputted as the second list 320B sorted according to the posting fee 4. Consequently, a company's person in charge can reach a promising idea 3 easily, simply by preferentially checking high ranks on the list in a state where many good and bad ideas 3 (the summary character data 3A) are sorted according to the amount of the posting fee 4. Therefore, a promising idea 3 can be easily found from many collected ideas 3.

### (Modification E)

In the information processing system 1 according to the embodiment and the modifications thereof, the posting fee 4 may be fixed amount data that is expensive to the degree that the poster 2 may hesitate to pay as the posting fee 4 for the idea 3, or index data corresponding to the fixed amount data. The posting fee 4 is, for example, fixed amount data equal to or greater than 500 yen, five dollars, or five euros, or index data corresponding to the fixed amount data. The posting fee 4 is preferably fixed amount data equal to or greater than 1000 yen, 10 dollars, or 10 euros, or index data corresponding to the fixed amount data. The posting fee 4 is preferably fixed amount data equal to or greater than 5000 yen, 50 dollars, or 50 euros, or index data corresponding to the fixed amount data. The "index data corresponding to the fixed amount data equal to or greater than 500 yen, five dollars, or five euros" is a concept including amount data in different currency from the yen, dollar, and euro other than the above-mentioned points and ranks.

In this modification, the posting fee 4 is determined by the operator of the information processing system 1. The poster 2 cannot determine the amount of the posting fee 4 in person. The nature of the posting fee 4 of this modification is different in this respect from the nature of the posting fee 4 in the embodiment and the modifications thereof. However, the poster 2 is asked to pay a predetermined amount for each post. Accordingly, the poster 2 falls into a negative state of mind of being unwilling to waste money for a post. Hence, only the posters 2 having an enthusiasm for the idea 3 that overcomes such a negative state of mind post the ideas 3. Accordingly, generally, only promising ideas 3 gather in the information processing system 1.

If the posting fee 4 is the fixed amount data equal to or greater than 500 yen, five dollars, or five euros, or the index data corresponding to the fixed amount data, the posters 2 feel a psychological burden for monetary payment. Hence, in this case, more promising ideas 3 are likely to gather than in a case where the posting fee 4 is free.

If the posting fee 4 is the fixed amount data equal to or greater than 1000 yen, 10 dollars, or 10 euros, or the index data corresponding to the fixed amount data, the posters 2 feel a psychological burden for payment with a relatively large-denomination bill (a 1000-yen bill, 10-dollar bill, or 10-euro bill). Hence, in this case, more promising ideas 3 are likely to gather than in the case where the posting fee 4 is the fixed amount data of approximately 500 yen, five dollars, or five euros, or the index data corresponding to the fixed amount data.

If the posting fee 4 is the fixed amount data equal to or greater than 5000 yen, 50 dollars, or 50 euros, or the index data corresponding to the fixed amount data, the posters 2 feel a psychological burden for payment with a very large-denomination bill (a 5000-yen bill, 50-dollar bill, or 50-euro bill). Hence, in this case, more promising ideas 3 are likely to gather than in the case where the posting fee 4 is the fixed amount data of approximately 1000 yen, 10 dollars, or 10 euros, or the index data corresponding to the fixed amount data.

In this manner, in this modification, generally only promising ideas 3 gather in the information processing system 1. Therefore, a company's person in charge who uses the terminal apparatus 400 can find a promising idea 3 easily from many collected ideas 3, saving some time and effort to sort out unpromising ideas.

### <3. Second Embodiment>

Next, an information processing system 6 according to a second embodiment of the present invention is described. Fig. 17 illustrates an example of a schematic configuration of the information processing system 6. The information processing system 6 makes it possible to easily find promising ideas from many ideas solicited from an indefinite number of individuals, organizations, universities, companies, or the like, and is intended to consequently support the creation of hit products.

The information processing system 6 includes a terminal apparatus 500 that serves as both the server apparatus 300 and the terminal apparatus 400 in the information processing system 1 according to the first embodiment and the modifications thereof. Therefore, effects similar to those of the information processing system 1 according to the first embodiment and the modifications thereof are exerted in the embodiment.

### <4. Common Modifications>

### (Modification F)

In the embodiments and the modifications thereof, the amount or index data as the posting fee 4 has an aspect as charge data for use of the information processing system 1 or 6 (the idea posting service). Examples of those serving as the charge data for use of the information processing system 1 or 6 (the idea posting service) include account fee data of the information processing system 1 or 6 (the idea posting service), storage fee data of the idea 3, posting page creation fee data, data input fee data, reference fee data, self-evaluation fee data, and option fee data.

The account fee is a charge that is imposed on the acquisition of a license for using the information processing system 1 or 6 (the idea posting service). The storage fee is a charge that is imposed on the storage of the posted idea 3 in the server apparatus 300. The posting page creation fee is a charge that is imposed on the creation of a dedicated idea posting page assigned to each poster 2, or a charge that is imposed on the acquisition of a URL of the dedicated idea posting page. The data input fee is a charge that is imposed on the input of data of the idea 3 into the information processing system 1 or 6. The reference fee is a charge that is imposed on the selection of the posted idea 3 (the summary character data 3A) on the terminal apparatus 400. The self-evaluation fee is a charge that is imposed according to the content of a judgment made by the poster 2 himself/herself about the degree of possibility of commercialization or a hit of the idea 3. The option fee is a charge that is imposed according to the content of a post at the time of positing the idea 3.

In the embodiments and the modifications thereof, the accepting unit 210 may accept amount data, or its corresponding index data, selected by the poster 2 from a plurality of options for the account fee data of the information processing system 1 or 6 (the idea posting service), the storage fee data of the idea 3, the posting page creation fee data, the data input fee data, the reference fee data, the self-evaluation fee data, or the option fee data. In other words, in the embodiments and the modifications thereof, the accepting unit 210 may accept the account fee data, the storage fee data, the posting page creation fee data, the data input fee data, the reference fee data, the self-evaluation fee data, or the option fee data instead of data on the posting fee 4. Therefore, in the embodiments and the modifications thereof, the posting fee 4 may be read as the account fee, the storage fee of the idea 3, the posting page creation fee, the data input fee, the reference fee, the self-evaluation fee, or the option fee.

In the embodiments and the modifications thereof, for example, at another opportunity different from the acceptance of a post of the idea 3, or when accepting a post of the idea 3, the accepting unit 210 may request the account fee data of the information processing system 1 (the idea posting service), the storage fee data of the idea 3, the posting page creation fee data, the data input fee data, the reference fee data, the self-evaluation fee data, or the option fee data, and accept presented amount data or index data corresponding to the amount data, as the account fee data of the information processing system 1 or 6 (the idea posting service), the storage fee data of the idea 3, the posting page creation fee data, the data input fee data, the reference fee data, the self-evaluation fee data, or the option fee data. At this point in time, the account fee data of the information processing system 1 or 6 (the idea posting service), the storage fee data of the idea 3, the posting page creation fee data, the data input fee data, the reference fee data, the self-evaluation fee data, or the option fee data have a nature like a measure to measure the usefulness of the idea 3.

It is conceivable that the reason why there is a plurality of options for the account fee is, for example, because the range of services for the poster 2 is different depending on the amount of the account fee. It is conceivable that the reason why there is a plurality of options for the storage fee of the idea 3 is, for example, because the storage period and the space where data can be stored are different depending on the amount of the storage fee of the idea 3. It is conceivable that the reason why there is a plurality of options for the posting page creation fee is, for example, because the range of services for the poster 2 is different depending on the amount of the posting page creation fee. It is conceivable that the reason why there is a plurality of options for the character input fee is, for example, because the character input fee is different depending on the number of characters of the idea 3 posted.

It is conceivable that the reason why there is a plurality of options for the reference fee is, for example, to be different depending on the number of possibilities to select the posted idea 3 (the summary character data 3A) (specifically, the number of possibilities to transmit the transmission request 410B for a specific idea 3). It is conceivable that the reason why there is a plurality of options for the self-evaluation fee is, for example, because the poster 2 sets the self-evaluation fee according to the degree of possibility of commercialization or a hit of the idea 3 of the poster 2. It is conceivable that the reason why there is a plurality of options for the option fee is, for example, because in addition to standard character data, still image data, moving image data, a design drawing, experimental data, and the like are set as the types of data that can be posted as the idea 3, and the types are different depending on the number of options selected by the poster 3.

In this manner, in the embodiments and the modifications thereof, when the accepting unit 210 is configured in such a manner as to accept amount data or, its corresponding index data, selected by the poster 2 from a plurality of options as the count fee data, the storage fee data, the posting page creation fee data, the character input fee data, the reference fee data, the self-evaluation fee data, or the option fee data, the value of the amount or the level of the index corresponding to the amount has a large correlation with the degree of enthusiasm of the poster 2 for the idea 3, that is, the degree of promise of the idea 3 as in the posting fee 4. Hence, when many posted ideas 3 are sorted according to the amount of the account fee, the storage fee, the posting page creation fee, the character input fee, the reference fee, the self-evaluation fee, or the option fee, more promising ideas 3 are sorted to higher ranks on the list, and staler ideas 3 are sorted to lower ranks on the list. Therefore, a company's person in charge who uses the terminal apparatus 400 preferentially checks high ranks on the list where many good and bad ideas 3 have been sorted according to the amount of the account fee, the storage fee, the posting page creation fee, the character input fee, the reference fee, the self-evaluation fee, or the option fee and accordingly can reach a promising idea 3 easily.

In this manner, not an evaluation (judging skill) of a third party but the value of the account fee, the storage fee of the idea 3, the posting page creation fee, the character input fee, the reference fee, the self-evaluation fee, or the option fee is used at the time of listing many ideas 3 in this modification. In other words, the idea 3 is not the target that is evaluated by a third party (the evaluation target). Accordingly, it is possible to extremely reduce the manpower and cost for the operation of the system as compared to a system where the idea 3 is the target that is evaluated by a third party (the evaluation target). Therefore, a promising idea 3 can be easily found from many collected ideas 3.

When this modification is applied to Modification C, the account fee, the storage fee of the idea 3, the posting page creation fee, the data input fee, the reference fee, the self-evaluation fee, or the option fee is the amount, or its corresponding index, described in Modification C. Also in this case, the poster 2 is asked to pay a predetermined amount for the account fee, the storage fee of the idea 3, the posting page creation fee, the data input fee, the reference fee, the self-evaluation fee, or the option fee. Accordingly, the poster 2 falls into a negative state of mind of being unwilling to waste money for a post. Hence, only the posters 2 having an enthusiasm for the idea 3 that overcomes such a negative state of mind post the ideas 3. Accordingly, generally, only promising ideas 3 gather in the information processing system 1 or 6.

In the embodiments and the modifications thereof, the accepting unit 210 may not accept any of the posting fee 4, the account fee, the storage fee of the idea 3, the posting page creation fee, the character input fee, the reference fee, the self-evaluation fee, and the option fee.

### (Modification G)

In the embodiments and the modifications thereof, when a request (specifically, the transmission request 410A described below) has been made by the terminal apparatus 400 after selection of the summary character data 3A, the processing unit 320 outputs the summary character data 3A including the summary character data 3A that is the selection target accepted by the accepting unit 310 and has at least a part on which a process of making characters illegible has been performed, as the first list 320A or the second list 320B. Examples of the "process of making characters illegible" include graying out (displaying in gray) or blurring characters. In such a case, a company's person in charge does not need to spare unfruitful man-hours for the idea 3 that another company has already started working on (is under consideration). Therefore, a promising idea 3 can be easily found from many collected ideas 3.

### (Modification H)

In the embodiments and the modifications thereof, the accepting unit 210 grants the poster 2 the right to decide the posting fee 4 for the idea 3, and accepts an arbitrary posting fee 4 presented (inputted) by the poster 2. However, in the embodiments and the modifications thereof, the poster 2 may select amount data or its corresponding index data from a plurality of options in a system different from the information processing system 1 or 6, and the accepting unit 210 may accept the amount or index data selected by the poster 2. In other words, the accepting unit 210 itself may not grant the poster 2 the right to decide amount or index data and may accept amount or index data selected by the poster 2 from a plurality of options in a system different from the information processing system 1 or 6.

For example, assume that a plurality of cards whose purchase amounts are different from each other (for example, a 500-yen card, a 5000-yen card, and a 10000-yen card) is sold. A character string for identification (for example, a serial number, an ID number, or a URL) or a mark for identification (for example, a barcode) is indicated on these cards. The character string for identification or the mark for identification has a correspondence with the price of the card. The poster 2 selects (purchases) one of the plurality of cards (options) whose purchase amounts are different from each other, and inputs the character string or mark for identification indicated on the selected (purchased) card into the accepting unit 210. The accepting unit 210 accepts the input of the character string or mark for identification indicated on the card selected (purchased) by the poster 2.

Also in such a case, it is possible to easily collect promising ideas and easily find promising ideas from many collected ideas as in the embodiments and the modifications thereof.

### (Modification I)

In the embodiments and the modifications thereof, the accepting unit 210 grants the poster 2 the right to decide the posting fee 4 for the idea 3, and accepts an arbitrary posting fee 4 presented (inputted) by the poster 2. However, in the embodiments and the modifications thereof, the poster 2 may select a use period of the information processing system 1 or 6, and log in to the information processing system 1 or 6 in the selected use period. Moreover, in the embodiments and the modifications thereof, the poster 2 may select a use period of the information processing system 1 or 6, and provide (input) the idea 3 to the information processing system 1 or 6 in the selected use period. Examples of the use period include a use time period, a use date, a use week, and a use day of the week. If the use period is a use time period, a plurality of divided time periods may be always fixed, or change depending on some factor (for example, the weather).

The poster 2 may make a payment of an amount or its corresponding index based on the use period corresponding to the time when logging in to the information processing system 1 or 6 through the information processing system 1 or 6 or through a system different from the information processing system 1 or 6. Moreover, the poster 2 may make a payment of an amount or its corresponding index based on the use period corresponding to the time when providing (inputting) the idea 3 to the information processing system 1 or 6 through the information processing system 1 or 6, or through a system different from the information processing system 1 or 6.

For example, if the use period is a use day of the week, Monday, Wednesday, Friday correspond to days when the posting fee 4 is 500 yen, Tuesday, Thursday, and Saturday correspond to days when the posting fee 4 is 5000 yen, and Sunday corresponds to a day when the posting fee 4 is 10,000 yen. The selection of the use period (the selection of the login time, or the selection of the idea providing time) by the poster 2 corresponds to the selection of the posting fee 4 of the idea 3.

The accepting unit 210 may acquire (may accept) data on the login time, or the use period corresponding to the login time, selected by the poster 2 from a plurality of options (times). Moreover, the accepting unit 210 may acquire (may accept) data on the idea providing time, or the use period corresponding to the idea providing time, selected by the poster 2 from a plurality of options (times).

The output unit 220 may output the idea 3 accepted by the accepting unit 210, associating the idea 3 with the data on the login time, or the use period corresponding to the login time, accepted by the accepting unit 210. In this case, the processing unit 320 converts the data on the login time, or the use period corresponding to the login time, inputted from the terminal apparatus 200 into some index (such as an amount) that can be ranked. The processing unit 320 stores the idea 3 accepted by the accepting unit 310 in the storage unit 330, associating the idea 3 with the index (such as an amount) obtained by the conversion.

The output unit 220 may output the idea 3 accepted by the accepting unit 210, associating the idea 3 with the data on the idea providing time, or the use period corresponding the idea providing time, accepted by the accepting unit 210. In this case, the processing unit 320 converts the data on the idea providing time, or its corresponding use period, inputted from the terminal apparatus 200 into some index (such as an amount) that can be ranked. The processing unit 320 stores the idea 3 accepted by the accepting unit 310 in the storage unit 330, associating the idea 3 with the index (such as an amount) obtained by the conversion.

Also in such a case, it is possible to easily collect promising ideas, and easily find promising ideas from many collected ideas as in the embodiments and the modifications thereof.

When the poster 2 selects the use period of the information processing system 1 or 6, and provides (inputs) the idea 3 to the information processing system 1 or 6 in the selected use period, the accepting unit 210 may not acquire (may not accept) the data on the login time or its corresponding use period, or the data on the idea providing time or its corresponding use period. However, in this case, the processing unit 320 converts the data on the time when the idea 3 is inputted from the terminal apparatus 200 (the idea input time), or its corresponding use period, into some index (such as an amount) that can be ranked. The processing unit 320 stores the idea 3 accepted by the accepting unit 310 in the storage unit 330, associating the idea 3 with the index (such as an amount) obtained by the conversion. Also in such a case, it is possible to easily collect promising ideas, and easily find promising ideas from many collected ideas as in the embodiments and the modifications thereof.

The present invention can take, for example, the following configurations:
(1) An information processing apparatus including:
   an accepting unit configured to accept posted ideas; and
   a processing unit configured to store the ideas accepted by the accepting unit in a storage unit, wherein
   each of the ideas includes summary character data with a relatively small number of characters and detailed character data with a relatively large number of characters,
   the processing unit outputs, as a list, a plurality of sets of the summary character data read from the storage unit, and
   after the accepting unit accepts a selection of the summary character data on the list, the processing unit outputs, as the list, the summary character data without at least part of the summary character data being the selection target accepted by the accepting unit, or the summary character data including the summary character data that is the selection target accepted by the accepting unit and has at least a part on which a process of making characters illegible has been performed.
(2) The information processing apparatus according to (1), wherein after outputting, as the list, the summary character data without at least part of the summary character data being the selection target accepted by the accepting unit, or the summary character data including the summary character data that is the selection target accepted by the accepting unit and has at least a part on which the process of making characters illegible has been performed, the processing unit outputs, as the list, the summary character data including the summary character data being the selection target accepted by the accepting unit on the basis of the satisfaction of a predetermined condition.
(3) An information processing apparatus for selecting and displaying an idea, the idea having: summary data with a relatively small number of characters; detailed data with a relatively large number of characters; and more detailed explanatory data than the detailed data, the information processing apparatus including:
   a selection acceptance unit configured to accept a selection of one of a plurality of sets of the summary data displayed in a list form; and
   a display unit configured to request a user to conclude a non-disclosure agreement on the idea corresponding to the selected summary data, and upon having accepted the user's agreement on the conclusion of the non-disclosure agreement, display the detailed data of the idea being the target of the non-disclosure agreement.
(4) The information processing apparatus according to (3), wherein upon having accepted a request to disclose the explanatory data on the idea corresponding to the displayed detailed data, the display unit displays the requested explanatory data.
(5) An information processing program causing a computer to execute:
   an acceptance step of accepting a post of an idea, and accepting amount data, or index data corresponding to the amount data, selected by a poster of the idea from a plurality of options; and
   an output step of outputting the idea accepted in the acceptance step, associating the idea with the amount or index data accepted in the acceptance step, wherein
   the acceptance step includes, upon accepting the post of the idea, presenting one or more parameters related to a self-evaluation of the idea, and accepting amount data, or index data corresponding to the amount data, in accordance with a selection result of an evaluation level based on the presented one or more parameters.

## Claims

1. An information processing program causing a computer to execute:
an acceptance step of accepting a post of an idea and accepting amount data, or index data corresponding to the amount data, selected by a poster of the idea from a plurality of options, or presented by the poster of the idea within a range that does not exceed an upper limit, as payment in accordance with the post of the idea; and
an output step of outputting the idea accepted in the acceptance step, associating the idea with the amount or index data accepted in the acceptance step.

2. An information processing apparatus comprising:
an accepting unit configured to accept a posted idea, and accept amount data, or index data corresponding to the amount data, selected by a poster of the idea from a plurality of options, or presented by the poster of the idea within a range that does not exceed an upper limit, as payment in accordance with the post of the idea; and
a processing unit configured to store the idea accepted by the accepting unit in a storage unit, associating the idea with the amount or index data accepted by the accepting unit.

3. The information processing apparatus according to claim 2, wherein each of the ideas includes summary character data with a relatively small number of characters and detailed character data with a relatively large number of characters.

4. The information processing apparatus according to claim 3, wherein the processing unit outputs a plurality of sets of the summary character data read out from the storage unit as a first list associated with the amount or index data, or as a second list sorted out according to the amount or index data.

5. The information processing apparatus according to claim 4, wherein
the accepting unit accepts a selection of the summary character data on the first or second list, and
the processing unit reads and outputs, from the storage unit, the detailed character data corresponding to the summary character data being a selection target accepted by the accepting unit.

6. The information processing apparatus according to claim 5, wherein
after the selection of the summary character data, as the first or second list, the processing unit outputs the summary character data without at least part of the summary character data being the selection target accepted by the accepting unit, or the summary character data including the summary character data being the selection target accepted by the accepting unit and having at least a part on which a process of making characters illegible has been performed.

7. The information processing apparatus according to claim 6, wherein after outputting, as the first or second list, the summary character data without at least part of the summary character data being the selection target accepted by the accepting unit, or the summary character data including the summary character data being the selection target accepted by the accepting unit and having at least a part on which the process of making characters illegible has been performed, the processing unit outputs the summary character data including the summary character data being the selection target accepted by the accepting unit as the first or second list on the basis of satisfaction of a predetermined condition.

8. An information processing program causing a computer to execute:
a first reading step of reading information from a storage unit; and
a first processing step of processing the information read out in the first reading step, wherein
the storage unit stores a posted idea, associating the idea with amount data, or index data corresponding to the amount data, selected by a poster of the idea from a plurality of options as payment in accordance with the post of the idea, or presented by the poster of the idea within a range that does not exceed an upper limit as payment in accordance with the post of the idea,
the idea includes summary character data with a relatively small number of characters and detailed character data with a relatively large number of characters,
the first reading step includes reading a plurality of sets of the summary character data and the amount or index data, as the information, from the storage unit, and
the first processing step includes causing a display unit to display the plurality of sets of the summary character data read out from the storage unit as a first list associated with the amount or index data read out from the storage unit, or as a second list sorted out according to the amount or index data read out from the storage unit.

9. The information processing program according to claim 8, further causing a computer to execute:
an acceptance step of accepting a selection of the summary character data on the first or second list;
a second reading step of reading out, from the storage unit, the detailed character data corresponding to the summary character data being the selection target accepted in the acceptance step; and
a first processing step of causing the display unit to display the detailed character data read out in the second reading step.

10. An information processing program causing a computer to execute:
a first reading step of reading out information from a storage unit; and
a first processing step of processing the information read out in the first reading step, wherein
the storage unit stores a posted idea, associating the idea with amount data, or index data corresponding to the amount data, selected by a poster of the idea from a plurality of options as payment in accordance with the post of the idea, or presented by the poster of the idea within a range that does not exceed an upper limit as payment in accordance with the post of the idea,
the idea includes summary character data with a relatively small number of characters and detailed character data with a relatively large number of characters,
the first reading step includes reading out a plurality of sets of the summary character data sorted out according to the amount or index data, as the information, from the storage unit, and
the first processing step includes causing a display unit to display the plurality of sets of the summary character data read out from the storage unit as a list sorted out according to the amount or index data.

11. The information processing program according to claim 10, further causing a computer to execute:
an acceptance step of accepting a selection of the summary character data on the list;
a second reading step of reading out, from the storage unit, the detailed character data corresponding to the summary character data being the selection target accepted in the acceptance step; and
a second processing step of causing the display unit to display the detailed character data read out in the second reading step.

12. An information processing program causing a computer to execute:
a first acceptance step of accepting a post of an idea;
a second acceptance step of accepting fixed amount data equal to or greater than 500 yen, five dollars, or five euros, or index data corresponding to the fixed amount data, as payment in accordance with the post of the idea; and
an output step of outputting the idea accepted in the first acceptance step.
